(19) **Europäisches Patentamt / European Patent Office / Office européen des brevets**

(11) **EP 3 974 902 B1**

(12) # EUROPEAN PATENT SPECIFICATION

(45) Date of publication and mention
of the grant of the patent:
**12.02.2025 Bulletin 2025/07**

(21) Application number: **21191598.8**

(22) Date of filing: **17.08.2021**

(51) International Patent Classification (IPC):
**G03B 17/55** (2021.01)    **F27D 21/02** (2006.01)
**B08B 5/02** (2006.01)    **F23N 5/08** (2006.01)
**F23M 11/04** (2006.01)

(52) Cooperative Patent Classification (CPC):
**F23N 5/08; F23M 11/045; F27D 21/02; G03B 17/55;**
F23M 2900/11041; F23N 2229/20

(54) **BURNER SYSTEM HAVING A BURNER DEVICE FOR MONITORING OF A FLAME WITHIN A BURNING CHAMBER, AND METHOD**

BRENNERSYSTEM MIT EINEM BRENNERGERÄT ZUM BEOBACHTEN EINER FLAMME INNERHALB EINER BRENNKAMMER, UND VERFAHREN

SYSTÉME DE BRULEUR AVEC UN DISPOSITIF DE BRULEUR POUR OBSERVER UNE FLAMME DANS UNE CHAMBRE DE COMBUSTION, ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2020 GB 202015057**

(43) Date of publication of application:
**30.03.2022 Bulletin 2022/13**

(73) Proprietor: **Bosch Thermotechnology Ltd (UK) Worcester, Worcestershire WR4 9SW (GB)**

(72) Inventor: **Collins, Tom Worcester, WR3 8XA (GB)**

(74) Representative: **Bee, Joachim Robert Bosch GmbH, C/IPE P.O. Box 30 02 20 70442 Stuttgart (DE)**

(56) References cited:
**JP-A- 2003 194 481    KR-A- 20030 075 234 KR-A- 20120 124 590**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Prior art

Document DE 26 12 374 A1 discloses a burner device for a monitoring of a flame within a burning chamber, comprising a viewing window that is arranged at the burning chamber to enable a line of sight from an outside of the burning chamber onto at least a portion of a flame-generating region of the burning chamber. Document KR 2012 0124590 A shows a burner system and a method for operating a burner system according to the preamble of claim 1.

Documents KR 2003 0075234 A and JP 2003 194481 A show further burning systems comprising a viewing window and a flame monitoring sensor.

Disclosure of the invention

The invention is based on a burner system, according to claim 1, comprising at least one burner device for a monitoring of a flame within a burning chamber, comprising a viewing window that is arranged at the burning chamber to enable a line of sight from an outside of the burning chamber onto at least a portion of a flame-generating region of the burning chamber.

It is proposed that the burner device comprises an environment adjustment unit that is arranged on an outer side of the viewing window, i.e. a side facing away from the burning chamber, and is configured to control an impact of at least one environmental condition onto the outer side of the viewing window. The burning chamber comprises a burner which is configured to burn a fuel, in particular natural gas and/or hydrogen, inside the flame-generating region. In particular, the burning chamber comprises a heat-resistant casing which encloses the flame-generating region and the burner. The burner device may in particular be configured to enable a flame detection based on an electromagnetic sensor unit that is arranged on an outside of the burning chamber and is configured to detect electromagnetic radiation emitted or altered by a flame within the flame-generating region. The electromagnetic sensor unit can be included in the burner device or it can be realized as a separate device from the burner device. The burner device in particular provides the electromagnetic sensor unit with the line of sight onto the flame-generating region.

The viewing window preferably comprises a glass body. In particular, the glass body comprises an outer side, which is configured to face towards the electromagnetic sensor unit, and an inner side, which is configured to face towards the flame-generating region. The glass body in particular may comprise on its outer side and on its inner side, surfaces that are parallel to each other. In some embodiments the surface of one or both of the outer side and the inner side may be curved, e.g. to realize a magnifying lens, a focusing lens, a fisheye lens or similar. Optionally the viewing window comprises one or several coatings deposited on the glass body. The viewing window can be implemented to be mountable to the casing, e.g. as part of a flange, as part of a hatch or the like, or to be integrated directly in the casing, e.g. via glass-to-metal joining. The viewing window is preferably transparent at at least one transparency frequency band for electromagnetic waves. "Transparent" at a frequency should preferably mean showing a transmission coefficient for electromagnetic waves of that frequency that is greater than 0.25, preferably greater than 0.4, preferentially at least 0.6. Preferably the transparency frequency band comprises at least one frequency detectable by the electromagnetic sensor unit. Optionally the transparency frequency band is optimized for a single center frequency that is detectable by the electromagnetic sensor unit, in particular with a band width of the frequency band being equivalent to less than 15 %, preferably less than 10 % of the center frequency. Alternatively, the transparency frequency band comprises at least a substantial portion of the visible spectrum and/or the ultraviolet spectrum. A "substantial portion" of a range of values should in particular be understood as at least 15 %, preferably at least 25 %, particularly preferably at least 33 % of said range of values. The viewing window may comprise several separate or overlapping transparency frequency bands.

The environment adjustment unit is arranged on an outside of the burning chamber, i.e. on a side of the casing that faces away from the flame-generating region. In some embodiments the environment adjustment unit and the burning chamber share a housing and/or the environment adjustment unit is recessed, e.g. sunk flush, in the casing of the burning chamber. During operation of the burning chamber, the inner side of the viewing window is exposed to an environment that usually shows a higher temperature and/or a higher pressure than atmospheric temperature and/or atmospheric pressure, respectively. The environment adjustment unit is configured to prevent, to cancel out or to lessen a negative effect due to a difference in environmental conditions on the inner side and on the outer side of the viewing window, by acting directly or indirectly upon the outer side of the viewing window. A negative effect due to a difference in environmental conditions may be any effect that damages the burner device and/or the burning chamber, such as mechanical and/or thermal stress, that pollutes the environment, e.g. by fuel or exhaust gas escaping through a leaking sealing or a crack of the viewing window, and/or encumbers the line of sight, e.g. by condensation of humidity on the viewing window. The environment adjustment unit is configured to alter at least one environmental condition and to create an artificial environment on the outer side of the viewing window. Environmental conditions adjustable by the environment adjustment unit comprise environment pressure and may comprise environment temperature, environment humidity, electromagnetic radiation directed at the viewing window and/or a chemical composition of the environment.

By such an implementation it is possible for the viewing window to be operated under controlled conditions. In particular, a difference in environmental condition on the outer side of the viewing window and on the inner side of the viewing window can be adjusted. In particular, mechanical or thermal stress of the viewing window can be kept advantageously low. A risk of damaging the viewing window or a sealing of the viewing window can be kept advantageously low. A risk of particle deposition at the viewing window can be kept advantageously low. Effects, such as condensation, caused by the viewing window acting as thermal bridge can be kept advantageously low. The burner device in particular allows an advantageously reliable flame detection through the viewing window and thereby an advantageously safe operation of the burning chamber.

According to the invention, the environment adjustment unit comprises a pressure chamber, wherein the viewing window is arranged on a wall of the pressure chamber. The outer side of the viewing window preferably faces towards an interior of the pressure chamber. In particular, the inner side of the viewing window faces away from the pressure chamber. Preferably, the viewing window separates the interior of the pressure chamber from the flame-generating region. Preferably, a total volume of the pressure chamber is smaller than a total volume of the burner chamber. In some embodiments the burning chamber may be partly or fully enclosed by the pressure chamber. The pressure chamber is configured to increase, or respectively maintain a pressure within the pressure chamber to, respectively at a value above atmospheric pressure and in particular above a burning chamber pressure inside the burning chamber, especially during operation of the burning chamber. The environment adjustment unit comprises at least one gas inlet configured for filling the pressure chamber with a gas, preferably with air, with an exhaust gas or with an industrial gas, in particular an inert gas. Optionally the gas-inlet comprises a fan or a compressor configured for a suction of ambient air into the pressure chamber. Alternatively or additionally, the gas-inlet comprises a gas connector to connect the gas inlet to a pressurized gas reservoir, such as a pressure cylinder or an external supply line. In an alternative embodiment a fixed amount of gas is sealed within the pressure chamber, with the pressure chamber comprising an expansion tank. According to the invention, the pressure chamber is gastight, apart from the gas inlet. Thus, a risk of fuel or exhaust gas escaping from the burning chamber to the outside, e.g. due to a leaking sealing of the viewing window, can be kept advantageously low.

The burner device comprises a flame sensor that is arranged inside the environment adjustment unit. In particular, the electromagnetic sensor unit may be embodied as the flame sensor. Alternatively, the flame sensor may be implemented separately from the electromagnetic sensor unit, in particular as a complementary sensor to the electromagnetic sensor unit and/or as a failsafe device for the electromagnetic sensor unit. Preferably, the flame sensor is an optical sensor and/or an ultraviolet sensor configured to detect a flame by incoming light and/or by ultraviolet radiation caused by a flame. The flame sensor is preferably arranged within the line of sight onto the flame-generating region. Optionally the flame sensor comprises an optical element, such as a mirror with a sharp edge or a semi-transparent mirror, to deflect a portion of electromagnetic radiation from the line of sight and to transmit another portion of electromagnetic radiation along the line of sight. Preferably, the flame senor is arranged in the interior of the pressure chamber. Optionally the pressure chamber comprises a pressure chamber casing which is non-transparent for light, ultraviolet radiation and/or at least for a frequency band width that is detectable by the flame sensor. By such an implementation an additional alignment of an external electromagnetic sensor unit can dispensed with. A casing or pressure chamber of the environment adjustment unit can be realized advantageously to be non-transparent, such that an interference with ambient radiation can be kept advantageously low. A necessity of maintaining the line of sight through the environment adjustment unit can be avoided. The environment adjustment unit can be implemented in an advantageously robust and/or compact manner.

Furthermore, it is proposed that the environment adjustment unit comprises a further viewing window for the purpose of extending the line of sight through the environment adjustment unit. In particular, the further viewing window may be integrated in the pressure chamber casing for extending the line of sight through the pressure chamber. The further viewing window is preferably transparent at at least one further transparency frequency band for electromagnetic waves, which is in particular the same frequency band as or overlaps with the transparency frequency band of the viewing window. Preferably, the further transparency frequency band comprises at least one frequency that is detectable by the electromagnetic sensor unit. By such an implementation the electromagnetic sensor unit can be arranged on an outside of the environment adjustment unit and/or an external electromagnetic sensor unit could be used. The electromagnetic sensor unit is advantageously easily accessible.

According to the invention, the burner device comprises an, in particular the above-mentioned, gas inlet, which is configured to supply the environment adjustment unit with a gas via a supply connection that is configured to connect the gas inlet to a conduit of the burning chamber or a fan upstream of the burning chamber. The supply connection may be realized as the above-mentioned gas connector for manually connecting and disconnecting the gas inlet and the conduit or it may be realized as an integral implementation of the gas inlet and the conduit. Preferably, the gas inlet is connected to a portion of the conduit upstream of the flame-generating region, in particular to an air supply, in particular directly to a fan of the air supply. Alternatively, the gas inlet is connected to an exhaust gas outlet of the burning chamber. By such an implementation the burner device can be kept advantageously simple. In particular, already pressurized gases from the burning chamber can be used to control at least one environmental condition of the outer side of the viewing window.

It is furthermore proposed that the environment adjustment unit comprises an emitter unit configured to emit electromagnetic radiation, wherein the emitter unit has a main emitting direction that is oriented towards the viewing window and has a main emitting frequency that is outside a transparency frequency band of the viewing window. Especially during operation of the burning chamber, heat is transferred via conduction and/or natural convection, from hot combustion gases on the inner side of the viewing window, through the viewing window and then the cooler gas on the outer side of the viewing window. This may cause a condensate, in particular water, to precipitate on the inner side of the viewing window. This problem is amplified further when gas pressure on the outer side of the viewing window is increased, as the rate of heat transfer via conduction and convection positively correlates with gas pressure. The emitter unit is in particular configured to heat at least a portion of the viewing window and/or to heat the condensate in order to make the condensate evaporate and/or to avoid condensation in the first place. Particularly, the emitter unit transfers heat via radiation, whereby a negative impact from gas pressure is negligible. Preferably, the emitter unit is arranged in a position apart from a position that allows the line of sight onto the flame-generating region, preferably if the emitter unit is realized separately from the electromagnetic sensor unit. Preferably, the emitter unit is arranged at a fixed holder element of the environment adjustment unit, e.g. at a post or on the pressure chamber casing of the pressure chamber. Alternatively, the emitter unit is mounted on a pivot arm, on a bendable gooseneck, on a telescopic bar, on a guide rail or the like for a manual or automatic alignment of the electromagnetic emitter unit relative to the viewing window and/or to the electromagnetic sensor unit. The emitter unit preferably comprises at least one emitter element configured to generate the electromagnetic radiation, e.g. a heating lamp or heating wire, a gas discharge lamp, a metal-halide lamp, a laser, a magnetron or another high-intensity source. Preferably, the emitter unit comprises a projector unit for a projection of the emitted electromagnetic radiation along the main emitting direction. The projector unit preferably comprises an emitter casing, which is preferably non-transparent for the main emitting frequency of the emitter element, and encloses the emitter element. The emitter casing preferably comprises an emitter aperture for emitting the electromagnetic radiation along the main radiation direction. Optionally the projector unit comprises a flat or curved reflector inside the emitter casing, with the emitter element being arranged between the emitter aperture and the reflector for the purpose of projecting the emitted electromagnetic radiation towards the emitter aperture. Optionally the projector unit comprises collimating, focusing or broadening optical components for an adjustment of a cross-section dimension of the emitted electromagnetic radiation in dependence of dimensions of the viewing window. The main emitting direction in particular indicates the direction in which the emitted electromagnetic radiation shows the highest intensity in an active operation state of the emitter element. Preferably, electromagnetic radiation emitted by the emitter unit, in particular by the emitter element, in a direction that is perpendicular or at least partly opposite to the main emitting direction, is virtually zero, i.e. an intensity of this electromagnetic radiation is by at least 50 %, preferably at least 75 %, more preferably 95 % less than the intensity of the electromagnetic radiation along the main emitting direction. Virtually zero electromagnetic radiation comprises black body radiation at least from the emitter casing and may in some embodiments comprise light and/or radio waves from a control lamp, a user-interface, a wireless communication device or other low intensity radiation sources of the burner device.

The main emitting direction can be aligned perpendicularly or inclined relative to a surface of the outer side of viewing window. A surface area of the electromagnetic radiation impacting on the viewing window may cover a portion of the viewing window, the whole viewing window or the viewing window plus a portion of the burning chamber surrounding the viewing window. The main emitting frequency in particular indicates the frequency at which the emitted electromagnetic radiation shows the highest intensity in an active operation state of the emitter element. Preferably, at least a substantial portion of a main emitting frequency band of the emitter unit comprising the main emitting frequency lies outside the transparency frequency band of the viewing window. Preferably, the main emitting frequency band of the emitter unit and the transparency frequency band of the viewing window are separate from each other in frequency space, i.e. do not overlap. Alternatively, a flank of the main emitting frequency band partially overlaps with the transparency frequency band. A range of the main emitting frequency band is preferably defined by a limit frequency at which the intensity is reduced to $1/\sqrt{2}$ of its peak value at the main emitting frequency. Preferably, the main emitting frequency is smaller than frequencies of the transparency frequency band. Preferably, the main emitting frequency is located within the visible spectrum or the infrared spectrum, especially if the transparency frequency band is within the ultraviolet spectrum. In an alternative embodiment the main emitting frequency is in the infrared or ultraviolet spectrum and the transparency frequency band is in particular within the visible spectrum. In a further alternative embodiment the main emitting frequency is located within the high frequency spectrum and the transparency frequency band is in particular within the infrared, visible and/or ultraviolet spectrum. Optionally the emitter unit comprises two or more emitter elements with the same or with different main emitting frequencies. By such an implementation the viewing window can be heated, as a result of which a risk of condensation of humidity at the viewing window can be kept advantageously low. In particular, the line of sight can be provided in an advantageously reliable manner.

In addition, it is proposed that the viewing window is at least essentially absorbent at the main emitting frequency of the emitter unit. "Essentially absorbent" should in particular mean showing an absorption coefficient of at least 0.25, preferably of at least 0.5, more preferably of at least 0.75, most preferably of at least 0.9. Preferentially, the viewing window is at least essentially absorbent for a substantial portion of the main emitting frequency band. Preferably, the glass body is at least essentially absorbent at the main emitting frequency. Alternatively or additionally, the viewing window comprises an absorption filter that is arranged at the glass body and that is at least essentially absorbent at the main emitting frequency. In particular, a main wavelength corresponding to the main emitting frequency is below 4 $\mu$m, preferably below 3.4 $\mu$m, more preferably below 2.8 $\mu$m. In particular, the main wavelength corresponding to the main emitting frequency is above 2 $\mu$m, preferably above 2.4 $\mu$m, more preferably above 2.7 $\mu$m. Alternatively, the main wavelength corresponding to the main emitting frequency is above 4 $\mu$m, in particular above 4.8 $\mu$m. Alternatively, the main wavelength corresponding to the main emitting frequency is above 7 $\mu$m, especially above 7.6 $\mu$m. Preferably, the main wavelength corresponding to the main emitting frequency is in most embodiments at least below 100 $\mu$m, which permits keeping an interference with background radiation advantageously low. By such an implementation a heating of the viewing window by means of the emitter unit is advantageously effective and advantageously fast. A risk of a hazardous amount of reflected or scattered electromagnetic radiation leaving the burner device can be kept advantageously low.

Furthermore, it is proposed that an, especially the aforementioned, transparency frequency band of the viewing window comprises at least one ultraviolet frequency. Preferably the viewing window, in particular the glass body, is made of fused silica or sapphire, alternatively from fused quartz melt, barium fluoride, calcium fluoride, caesium iodide, gallium arsenide, germanium, thallium bromo-iodide, lithium fluoride, magnesium fluoride, potassium bromide, silicon, sodium chloride, strontium fluoride, zinc selenide, zinc sulfide or any other glass showing a transparency frequency band at an ultraviolet frequency. By such an implementation flame detection by the electromagnet sensor can be based on ultraviolet radiation, in particular allowing remote detection of a hydrogen flame by means of electromagnetic radiation.

Additionally, it is proposed that the burner device comprises a sensor unit whose measuring site is located on or in a proximity of the viewing window and which is configured to trigger the environment adjustment unit in dependence of an environmental condition detected at the viewing window. Being "in a proximity of" an object should in particular mean being situated within a region around the object that is smaller than thrice, preferably smaller than twice, the maximal extension of said object. Preferably, the sensor unit comprises at least one window temperature sensor, in particular to obtain a temperature at or near the inner side of the viewing window. Optionally the sensor unit comprises at least one environmental temperature sensor, in particular to obtain a temperature at or near the outer side of the viewing window and/or at or in a proximity to the emitter unit. Optionally the sensor unit comprises at least one burner temperature sensor, in particular to obtain a temperature in a proximity of the flame-generating region or of the exhaust gas outlet. Alternatively or additionally, the sensor unit comprises a humidity sensor to obtain a humidity of the gas at or near the inner side of the viewing window and/or to detect condensate at or near the inner side of the viewing window. Optionally the sensor unit comprises a burner pressure sensor inside the burning chamber and/or an environment pressure sensor inside the environment adjustment unit, in particular inside the pressure chamber. Preferably, the burner device comprises a control unit. A "control unit" should in particular be understood as a unit with control electronics, wherein the control electronics in particular comprise at least a processor and a memory unit as well as an operating program stored in the memory unit or an analogous sensor signal processing circuit. In particular, the control unit is configured to receive a measurement signal from the sensor unit. The control unit is in particular configured to control the environment adjustment unit, in particular the emitter unit and/or the gas inlet, in dependence of the measurement signal. The control unit is in particular configured to at least activate or deactivate the emitter unit and/or the gas inlet in dependence of the measurement signal. Optionally the control unit controls an output power of the emitter unit, an alignment of the main emitting direction of the emitter unit, in particular by aligning the emitter unit and/or by aligning a beam path of the electromagnetic radiation, and/or the main emitting frequency. The condition of the viewing window in which the control unit activates the emitter unit and/or the gas inlet can be an obtained temperature at or in a proximity to the inner side of the viewing window below a threshold value, especially a dewpoint with an optional safety margin, a temperature decreasing trend above a threshold value, a temperature difference between a window temperature, an environmental temperature and/or a burner temperature above a threshold value, a humidity above a threshold value, especially a saturation point with an optional safety margin, a humidity increasing trend above a threshold value, an actual presence of condensate, or a combination thereof. The condition of the viewing window inducing the control unit to deactivate the emitter unit can be an obtained temperature at or in a proximity of the burner surface above a threshold value, a temperature increasing trend above a threshold value, a temperature difference between a window temperature, an environmental temperature and/or a burner temperature below a threshold value, a humidity below a threshold value, a humidity decreasing trend above a threshold value, a time period since the previous actual presence of condensate above a threshold value. Alternatively, the emitter unit is automatically deactivated after a fixed exposure time and is once again triggerable by the control unit either immediately or after an optional down time if the condition is still given. By such an implementation it is possible for the environment adjustment unit to be operated on demand and to thus be advantageously efficient. Furthermore, the environment adjustment unit can be adjusted advantageously in dependence of an actual condition within the burning chamber. In addition, this allows feed-back controlling of the environment adjustment unit by the control unit, allowing an advantageously precise adjustment of the environmental condition by the environment adjustment unit.

A burner system, in particular a gas burner system, is proposed, comprising at least one burner device according to the invention and a burning chamber which the burner device is arranged at. The burner system comprises the burner that is configured for burning the fuel. The fuel is preferably gaseous, e.g. natural gas, hydrogen, butane, methane, propane, other hydrocarbons, or a combination thereof. Alternatively, the burner is configured for burning a liquid or solid fuel. The burner system in particular comprises a fuel supply to conduct the fuel to the burner. Optionally the burner system comprises an air supply to actively conduct oxygen or ambient air to the burner. Alternatively, the burner is configured to passively suck in ambient air. Preferably, the burner system comprises an ignition device to ignite a fuel-oxygen mixture within the flame-generating region. The burner system in particular comprises the electromagnetic sensor unit for a detection and monitoring of a flame within the flame-generating region. By such an implementation a burner system can be realized which provides advantageously high operating safety.

The invention is furthermore based on a method, according to claim 9, for operating a burner device of a burner system, in particular a burner system, according to the invention, with a viewing window that is arranged at a burning chamber of a burner system, in particular a burner system according to the invention, to enable a line of sight from an outside of the burning chamber onto at least a portion of a flame-generating region of the burning chamber. It is proposed that the method comprises an environment adjustment phase, in which an environmental condition on an outer side of the viewing window, i.e. a side facing away from the burning chamber, is changed for the purpose of controlling an impact of the environmental condition onto the outer side of the viewing window. The method is preferably activated automatically by a start of operation of the burning chamber, in particular before or during an ignition phase of the burning chamber, in which an attempt to ignite an air-fuel mixture is executed within the flame-generating region by the burner system. The electromagnetic sensor unit preferably monitors the flame-generating region and in particular creates data signals in dependence on the detection and/or non-detection of a flame within the flame-generating region at least during the ignition phase and afterwards. An evaluation of the data signals from the electromagnetic sensor unit and an operation, especially a forced shutdown, of the burner system in dependence of those signals is known in the art. Preferably, the environment adjustment phase comprises a measurement step, in which a condition, e.g. a temperature, humidity and/or pressure, on the inner side of the viewing window and optionally on the outer side of the viewing window is detected. During the environment adjustment phase the control unit preferably adjusts the environmental condition on the outer side of the viewing window in dependence of the detected condition on the inner side of the viewing window or by a predetermined value stored in the memory unit of the control unit. By such an implementation the viewing window can be operated under controlled conditions. In particular, a difference in environmental conditions on the outer side of the viewing window and on the inner side of the viewing window can be adjusted. In particular, mechanical or thermal stress of the viewing window can be kept advantageously low. A risk of damaging the viewing window or a sealing of the viewing window can be kept advantageously low. A risk of particle deposition at the viewing window can be kept advantageously low. Effects, such as condensation, due to the viewing window acting as thermal bridge can be kept advantageously low. The method in particular allows an advantageously reliable flame detection through the viewing window and thereby an advantageously safe operation of the burning chamber

According to the invention, the method, especially the environment adjustment phase, comprises a pressurizing step, in which a pressure on the outer side of the viewing window is increased to a level above atmospheric pressure and/or above a burning chamber pressure within the burning chamber. The pressure is created within the pressure chamber. Preferably, the pressure is created by the air supply. Alternatively, the pressure is created by a fan or a compressor of the gas inlet. Optionally the pressure within the burning chamber is measured by the sensor unit, in order to adjust the pressure within the pressure chamber. Alternatively, the control unit obtains a predetermined pressure value from its memory unit. By such an implementation a risk of a fuel or exhaust gas leakage out of the pressure chamber can be kept advantageously low.

Additionally, it is proposed that the method comprises a radiation step, in which the viewing window is irradiated with electromagnetic radiation at a main emitting frequency outside a transparency frequency band of the viewing window. Preferably, the emitter unit emits the electromagnetic radiation. Preferably, the sensor unit measures the temperature and/or humidity on the inner side of the viewing window, in order to trigger the emitter unit to emit the electromagnetic radiation. Alternatively or additionally, the emitter unit is triggered at regular time intervals or by a timetable stored in the memory unit of the control unit. By such an implementation the viewing window can be advantageously heated and a cooling of the inner side of the viewing window by the outer side of the viewing window can be counteracted.

In addition, it is proposed that the radiation step is continued or repeated at least until a dewpoint of water is exceeded at the viewing window. By such an implementation the formation of condensate at the viewing window can be prevented and/or avoided.

Furthermore, it is proposed that the emitter unit emits the electromagnetic radiation towards the viewing window before and/or during an ignition phase of the burner chamber. Preferably, the radiation step is executed at the latest after the first failed attempt to ignite an air-fuel mixture. Preferably, the radiation step is executed after each failed attempt to ignite an air-fuel mixture. An attempt is in particular counted as a failure if no flame is detected by the electromagnetic sensor unit and/or the flame senor. Optionally the radiation step is executed during an attempt to ignite the air-fuel mixture. Preferably the radiation step is executed during regular operation of the burning chamber, in particular after a successful attempt to ignite the air-fuel mixture. Optionally, the radiation step is enforced during and/or before the ignition phase by the control unit, i.e. without triggering by the sensor unit. Optionally, the radiation step is triggered during regular operation by the sensor unit in regular time intervals and/or by a timetable. By such an implementation both an advantageously high operating safety of the burning chamber and a highly economical operation of the burner device can be achieved.

The burner system according to the invention and/or the method according to the invention are/is herein not to be restricted to the application and implementation described above. In particular, for fulfilling a function herein described, the burner system according to the invention and/or the method according to the invention may comprise a number of individual elements, components, units and/or method steps which differs from the number herein mentioned.

Drawings

Further advantages may be gathered from the following description of the drawings. In the drawings five exemplary embodiments of the invention are shown. The drawings, the description and the claims comprise a plurality of features in combination. The person skilled in the art will expediently also consider the features individually and will bring them together in further purposeful combinations.

The drawings show

In fig. 1  a schematic view of a burner system according to the invention,
In fig. 2  a schematic flow diagram of a method according to the invention,
In fig. 3  a schematic view of an alternative embodiment of a burner system according to the invention,
In fig. 4  a schematic view of a further alternative embodiment of a burner system according to the invention,
In fig. 5  a schematic view of an additional alternative embodiment of a burner device according to the invention, and
In fig. 6  a schematic view of a burner device not according to the invention.

Description of the exemplary embodiments

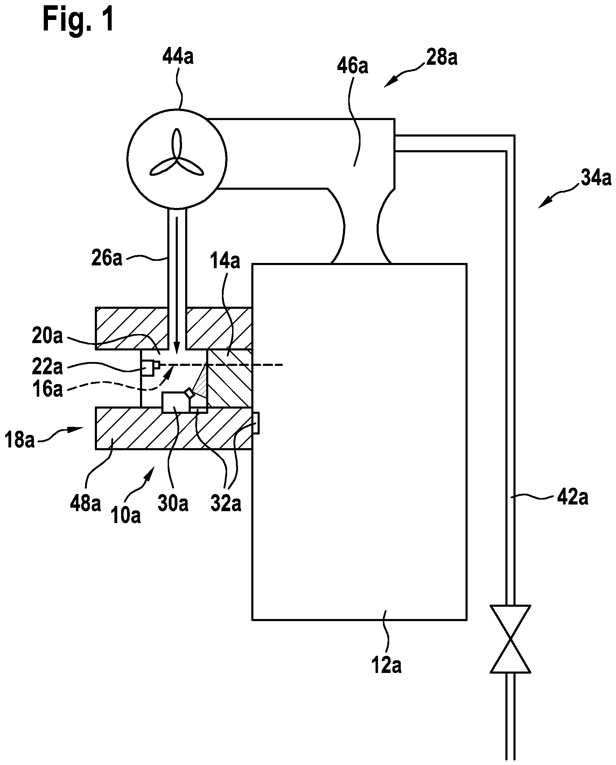

Figure 1 shows a burner system 34a. The burner system 34a is for example embodied as a boiler. The burner system 34a comprises a burning chamber 12a. The burning chamber 12a is in particular configured to burn a fuel, preferably natural gas, hydrogen or a mixture thereof. The burner system 34a in particular comprises a conduit 28a to transport the fuel, air and/or an exhaust gas from the burning of the fuel. Specifically, the burner system 34a comprises a fuel supply 42a to transport the fuel to the burning chamber 12a. The burning chamber 12a preferably comprises an air supply 44a, in particular to suck in ambient air and transport it to the burning chamber 12a. Preferably, the air supply 44a comprises a fan or a compressor to actively suck in ambient air. The burner system 12a in particular comprises a mixing chamber 46a to mix the air and the fuel upstream of a burner of the burning chamber 12a. Alternatively, a burner of the burning chamber 12a is configured to create a diffusion flame. The burner system 34a comprises a burner device 10a. The burner device 10a is configured for a monitoring of a flame within the burning chamber 12a. The burner device 10a comprises a viewing window 14a. The viewing window 14a is arranged at the burning chamber 12a. The viewing window 14a is configured to enable a line of sight 16a from an outside of the burning chamber 12a onto at least a portion of a flame-generating region of the burning chamber 12a. The burner system 34a in particular comprises an electromagnetic sensor unit operating as a flame sensor 22a. The electromagnetic sensor unit is configured to detect electromagnetic radiation, in particular light and/or ultraviolet radiation, from the flame-generating region. The electromagnetic sensor unit is in particular arranged at the line of sight 16a for a monitoring of the flame-generating region. The viewing window 14a in particular comprises an inner side facing towards the flame-generating region, in particular facing away from the electromagnetic sensor unit. The viewing window 14a in particular comprises an outer side facing away from the flame-generating region, in particular facing towards the electromagnetic sensor unit.

The burner device 10a comprises an environment adjustment unit 18a. The environment adjustment unit 18a is arranged on the outer side of the viewing window 14a for the purpose of controlling an impact of at least one environmental condition onto the outer side of the viewing window 14a. The environment adjustment unit 18a in particular comprises a holder 48a. Preferably, the holder 48a is arranged at, in particular attached to or implemented integrally with, a casing of the burning chamber 12a. The holder 48a is preferably configured to align and/or secure components of the environment adjustment unit 18a relative to the outer side of the viewing window 14a. The holder 48a may be embodied as a rod, a mounting plate, a chassis, a housing or the like. In the exemplary embodiment shown here the holder 48a protrudes from the casing of the burning chamber 12a. Alternatively, the holder 48a, especially the environment adjustment unit 18a, can be arranged in a recess of the casing of the burning chamber 12a or the burning chamber 12a can be arranged inside the holder 48a if the holder 48a is embodied as a common chassis or housing for the burning chamber 12a and the environment adjustment unit 18a.

The environment adjustment unit 18a comprises a pressure chamber 20a. The pressure chamber 20a is in particular arranged at the holder 48a. The viewing window 14a is arranged on a wall of the pressure chamber 20a. The viewing window 14a in particular separates an interior of the pressure chamber 20a from the flame-generating region. Preferably, the pressure chamber 20a is made of metal, glass or a pressure-resistant and preferably thermoset plastic. The burner device 10a comprises a gas inlet 26a to supply the environment adjustment unit 18a, especially the pressure chamber 20a, with a gas. The gas inlet 26a comprises a supply connection for connecting the gas inlet 26a to the conduit 28a of the burning chamber 12a. Preferably, the gas inlet 26a is connected to the air supply 44a. In particular, that gas inlet 26a is directly connected to the fan of the air supply 44a. The pressure chamber 20a is preferably configured to control a, in particular static, gas pressure on the outer side of the viewing window 14a.

The burner device 10a comprises the flame sensor 22a. Especially the electromagnetic sensor unit is designed as the flame sensor 22a. The flame sensor 22a is arranged inside the environment adjustment unit 18a, in particular inside the pressure chamber 20a. A pressure chamber casing of the pressure chamber 20a is preferably non-transparent for electromagnetic radiation that is detectable by the flame sensor 22a, in particular for light and/or ultraviolet radiation.

The environment adjustment unit 18a comprises an emitter unit 30a to emit electromagnetic radiation. The emitter unit 30a is in particular arranged at the holder 48a. The emitter unit 30a is preferably arranged inside the pressure chamber 20a. Preferably, the emitter unit 30a is arranged at a distance from the line of sight 16a. The emitter unit 30a has a main emitting direction that is oriented towards the viewing window 14a, especially on the outer side of the viewing window 14a. The emitter unit 30a has a main emitting frequency that is outside a transparency frequency band of the viewing window 14a. The transparency frequency band of the viewing window 14a comprises at least one ultraviolet frequency. The viewing window 14a is preferably transparent for light and/or ultraviolet radiation. The main emitting frequency of the emitter unit 30a is preferably located within the infrared or high frequency spectrum. The viewing window 14a is at least essentially absorbent at the main emitting frequency of the emitter unit 30a. In particular, the viewing window 14a is heatable by the electromagnetic radiation of the emitter unit 30a.

The burner device 10a comprises a sensor unit 32a whose measuring site is located on or in a proximity of the viewing window 14a. In particular, the sensor unit 32a comprises a window temperature sensor, in particular to obtain a temperature at or near the inner side of the viewing window 14a. Optionally the sensor unit 32a comprises at least one environmental temperature sensor, in particular to obtain a temperature at or near the outer side of the viewing window 14a. Optionally the sensor unit 32a comprises a burner pressure sensor that is arranged inside the burning chamber 12a. The sensor unit 32a is configured to trigger the environment adjustment unit 18a in dependence of a environmental condition, in particular a temperature below a threshold, that is detected at the viewing window 14a.

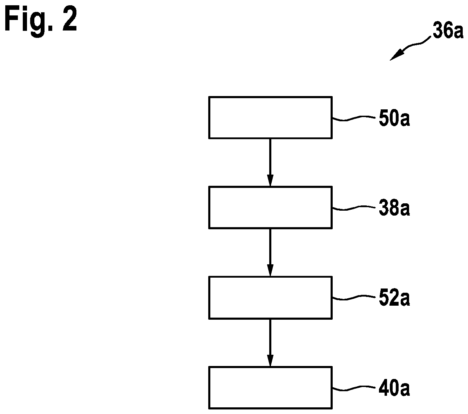

Figure 2 shows a method 36a for operating the burner device 10a. The method 36a comprises an environment adjustment phase, in which an environmental condition on the outer side of the viewing window 14a is changed for the purpose of controlling an impact of the environmental condition onto the outer side of the viewing window 14a. The method 36a preferably comprises a pressure measurement step 50a, in which the sensor unit 32a measures a pressure within the burning chamber 12a and optionally in the pressure chamber 20a. Preferably, the pressure measurement step 50a is activated with a start-up of the burning chamber 12a, especially with a start of operation of the fan or compressor of the air supply 44a. The environment adjustment phase comprises a pressurizing step 38a, in which a pressure on the outer side of the viewing window 14a, within the pressure chamber 20a, is increased to a level above atmospheric pressure and preferably above a burning chamber pressure within the burning chamber 12a. A control unit of the burner device 10a preferably creates a pressure control signal in dependence of the pressure measured within the burning chamber 12a and/or within the pressure chamber 20a or in dependence of a pressure difference between the burning chamber 12a and the pressure chamber 20a. The control unit preferably sends the pressure control signal to a valve of the gas inlet 26a. Alternatively, the control unit sends the pressure control signal to the air supply 44a, in particular to the fan or compressor of the air supply 44a, and/or to a fan or compressor included in the gas inlet 26a.

The environment adjustment phase comprises a dewpoint detection step 52a. In the dewpoint detection step 52a the sensor unit 32a measures at least a temperature and/or a humidity of the gas on the inner side of the viewing window, of the viewing window and/or of an inner wall of the burning chamber 12a. Optionally the sensor unit 32a measures a temperature and/or humidity inside the pressure chamber 20a. The environment adjustment phase comprises a radiation step 40a, in which the viewing window 14a is irradiated with electromagnetic radiation at the main emitting frequency outside the transparency frequency band of the viewing window 14a. The emitter unit 30a emits the electromagnetic radiation towards the viewing window 14a before and/or during an ignition phase of the burner chamber 12a. The control unit in particular sends a control signal to the emitter unit 30a to prompt an emission of the electromagnetic radiation. Preferably, an emission by the emitter unit 30a is triggered, in particular via the control unit, by the sensor unit 32a. The emitted electromagnetic radiation may be pulsed or continuous. The emitter unit 30a in particular starts emitting when a temperature monitored by the sensor unit 32a on the inner side of the viewing window 14a falls below a threshold, preferably above or equal to a dewpoint of water, and/or if humidity rises above a threshold, that is preferably below or equal to the dewpoint of water. During the radiation step 40a the viewing window 14a absorbs at least a portion, preferably at least a substantial portion, of the electromagnetic radiation emitted by the emitter unit 30a and heats up. The radiation step 40a is continued or repeated at least until the dewpoint of water is exceeded at the viewing window 14a, in particular on the inner side of the viewing window 14a. Preferably, a duration and/or intensity of the emission of the electromagnetic radiation are/is determined as fixed parameters during manufacturing or is chosen by the control unit as variables during operation, especially in dependence of a material and/or dimension of the viewing window 14a and/or of the sealing of the viewing window 14a, such that the dewpoint of water can be exceeded.

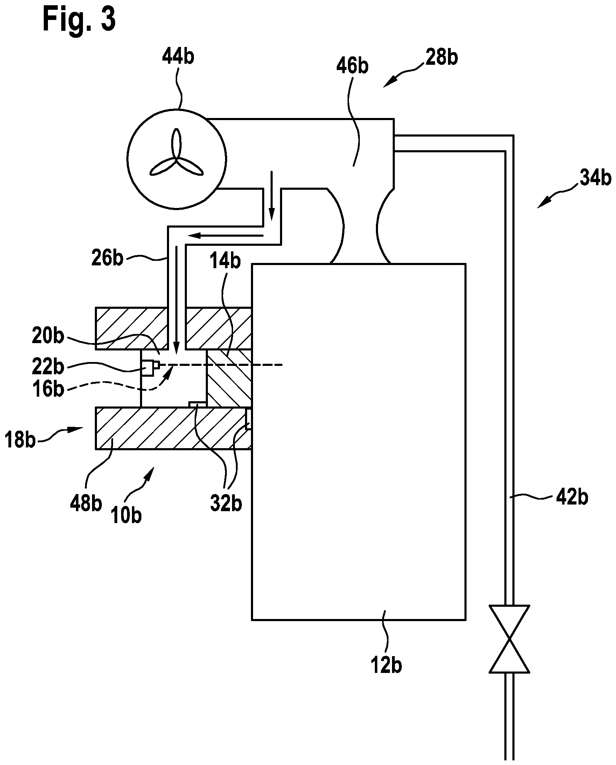

In Figures 3 to 5 three further embodiments of the invention are shown. The following description and the drawings are essentially limited to the differences between the embodiments, wherein features of components with the same denomination, especially components with the same reference numeral, can also be extracted from the drawings and/or the description of the other embodiments, in particular of Figures 1 and 2. The letter a is added to the reference signs of the embodiment shown in Figures 1 and 2, whereas in the embodiments shown in Figures 3 to 6 the letter a is substituted by the letters b to e, respectively, for the ease of distinguishing the embodiments.

Figure 3 shows a burner system 34b. The burner system 34b comprises a burning chamber 12b. The burner system 34b comprises a burner device 10b. The burner device 10b is configured for a monitoring of a flame within the burning chamber 12b. The burner device 10b comprises a viewing window 14b. The viewing window 14b is arranged at the burning chamber 12b. The viewing window 14b is configured to enable a line of sight 16b from an outside of the burning chamber 12b onto at least a portion of a flame-generating region of the burning chamber 12b. The burner device 10b comprises an environment adjustment unit 18b, which is arranged on an outer side of the viewing window 14b, for the purpose of controlling an impact of at least one environmental condition onto the outer side of the viewing window 14b. The environment adjustment unit 18b comprises a holder 48b and a pressure chamber 20b. A gas inlet 26b of the burner device 10b in particular connects the pressure chamber 20b fluidically with a mixing chamber 46b of the burner system 34b. For further features of the burner device 10b and the burner system 34b see also Figure 1 and the corresponding description.

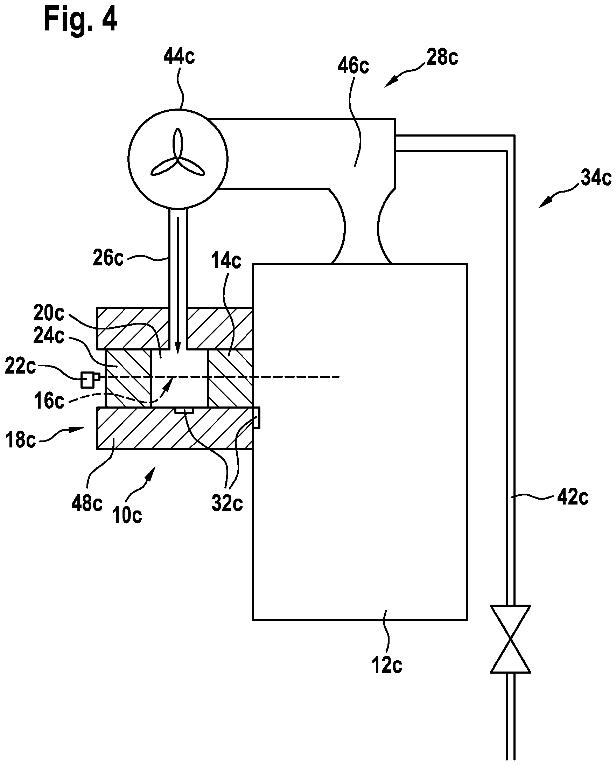

Figure 4 shows a burner system 34c. The burner system 34c comprises a burning chamber 12c. The burner system 34c comprises a burner device 10c. The burner device 10c is embodied as a burner device 10c for a monitoring of a flame within the burning chamber 12c. The burner device 10c comprises a viewing window 14c. The viewing window 14c is arranged at the burning chamber 12c. The viewing window 14c is configured to enable a line of sight 16c from an outside of the burning chamber 12c onto at least a portion of a flame-generating region of the burning chamber 12c. The burner device 10c comprises an environment adjustment unit 18c, which is arranged on an outer side of the viewing window 14c, for the purpose of controlling an impact of at least one environmental condition onto the outer side of the viewing window 14c. The environment adjustment unit 18c comprises a pressure chamber 20c. The burner device 10c comprises a further viewing window 24c. The further viewing window 24c is configured for extending the line of sight 16c through the environment adjustment unit 18c, especially through the pressure chamber 20c. The further viewing window 24c is in particular arranged on another wall of the pressure chamber 20c than the viewing window 14c. In particular, the viewing window 14c is embodied integrally with a wall of the pressure chamber 20c opposite a wall of the pressure chamber 20c which the viewing window 14c is arranged at. Alternatively, the pressure chamber 20c comprises one or more optical elements to deflect the line of sight 16c towards a non-opposite wall of the pressure chamber 20c with respect to the viewing window 14c. An electromagnetic sensor unit of the burner system 34c is preferably arranged at the line of sight 16c and on an outside of the pressure chamber 20c. In particular, the electromagnetic sensor unit faces the further viewing window 24c. The electromagnetic sensor unit can be arranged at a holder 48c of the environment adjustment unit 18c or at a separate holder. For further features of the burner device 10c and the burner system 34c see also Figures 1 to 3 and the corresponding description.

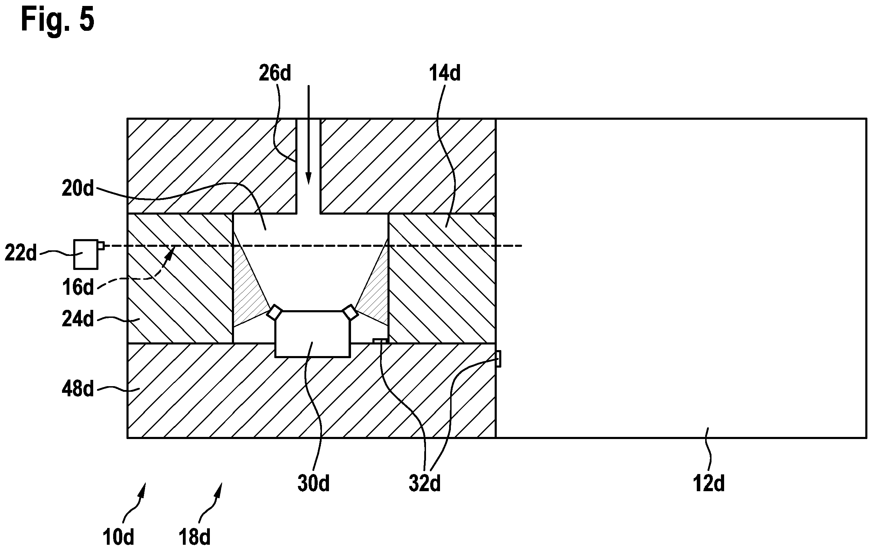

Figure 5 shows a burner device 10d for a monitoring of a flame within a burning chamber 12d. The burner device 10d comprises a viewing window 14d. The viewing window 14d is arranged at the burning chamber 12d. The viewing window 14d is configured to enable a line of sight 16d from an outside of the burning chamber 12d onto at least a portion of a flame-generating region of the burning chamber 12d. The burner device 10d comprises an environment adjustment unit 18d that is arranged on an outer side of the viewing window 14d, for the purpose of controlling an impact of at least one environmental condition onto the outer side of the viewing window 14d. The environment adjustment unit 18d comprises a pressure chamber 20d. The burner device 10d comprises a further viewing window 24d, which is arranged on a wall of the pressure chamber 20d. The environment adjustment unit 18d comprises an emitter unit 30d, which is in particular arranged inside the pressure chamber 20d. The emitter unit 30d has a main emitting direction that is oriented towards the viewing window 14d. The emitter unit 30d in particular has a further main emitting direction that is oriented towards the further viewing window 24d. The emitter unit 30d optionally comprises at least two different emitter elements, at least one of which is oriented towards a respective one of the viewing windows 14d. Alternatively or additionally, the emitter unit 30d comprises at least one emitter element, whose electromagnetic radiation is split between the main emitting directions. For further features of the burner device 10d and a burner system 34d see also Figures 1 to 4 and the corresponding description.

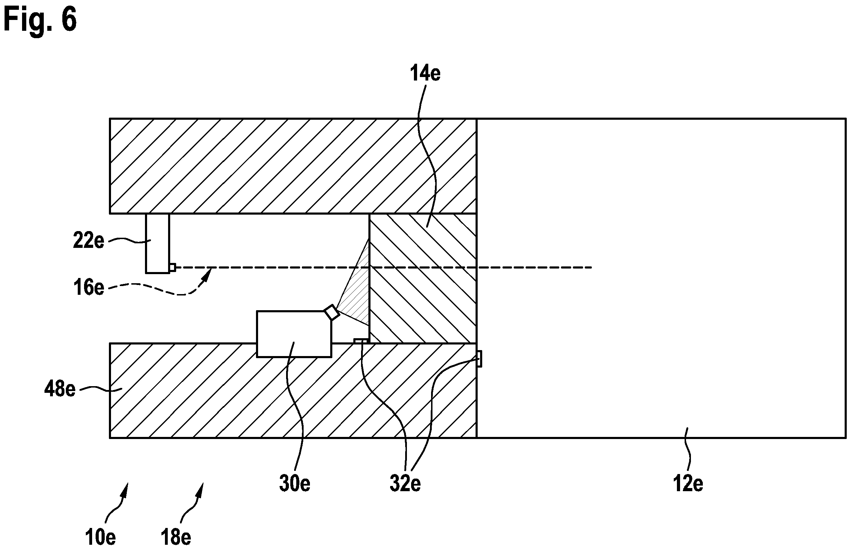

Figure 6 shows, not according to the invention, a burner device 10e for a monitoring of a flame within a burning chamber 12e. The burner device 10e comprises a viewing window 14e. The viewing window 14e is arranged at the burning chamber 12e. The viewing window 14e is configured to enable a line of sight 16e from an outside of the burning chamber 12e onto at least a portion of a flame-generating region of the burning chamber 12e. The burner device 10e comprises an environment adjustment unit 18e, which is arranged on an outer side of the viewing window 14e, for the purpose of controlling an impact of at least one environmental condition onto the outer side of the viewing window 14e. A region of the environment adjustment unit 18e, which is delimited by the outer side of the viewing window 14e and in which an emitter unit 30e of the environment adjustment unit 18e is arranged, is in particular in open fluidic exchange with ambient air. Optionally the environment adjustment unit 18e comprises a dust cover and/or a screen against ambient electromagnetic radiation, especially light and/or ultraviolet radiation. For further features of the burner device 10e see also Figures 1 to 5 and the corresponding description.

## Claims

1. A burner system comprising at least one burner device and a burning chamber (12a; 12b; 12c; 12d), which the burner device is arranged at, wherein the burner device is provided for a monitoring of a flame within the burning chamber (12a; 12b; 12c; 12d), comprising a viewing window (14a; 14b; 14c; 14d) that is arranged at the burning chamber (12a; 12b; 12c; 12d) to enable a line of sight (16a; 16b; 16c; 16d) from an outside of the burning chamber (12a; 12b; 12c; 12d) onto at least a portion of a flame-generating region of the burning chamber (12a; 12b; 12c; 12d) and an environment adjustment unit (18a; 18b; 18c; 18d), which is arranged on an outer side of the viewing window (14a; 14b; 14c; 14d) and is configured to control an impact of at least one environmental condition onto the outer side of the viewing window (14a; 14b; 14c; 14d), wherein the environment adjustment unit (18a; 18b; 18c; 18d) comprises a pressure chamber (20a; 20b; 20c: 20d), wherein the viewing window (14a; 14b; 14c; 14d) is arranged on a wall of the pressure chamber (20a; 20b; 20c: 20d), wherein the viewing window (14a; 14b; 14c; 14d) separates an interior of the pressure chamber (20a; 20b; 20c: 20d) from the flame-generating region and comprises at least one gas inlet (26a; 26b; 26c; 26d) configured for filling the pressure chamber (20a; 20b; 20c: 20d) with a gas, **characterized in that** the pressure chamber (20a; 20b; 20c; 20d) is gas-tight apart from the gas inlet (26a; 26b; 26c; 26d).

2. The burner system according to Claim 1, **characterized by** a flame sensor (22a; 22b) that is arranged inside the environment adjustment unit (18a; 18b).

3. The burner system according to claim 1 or 2, **characterized by** a further viewing window (24c; 24d) for the purpose of extending the line of sight (16c; 16d) through the environment adjustment unit (18c; 18d).

4. The burner system according to any one of the preceding claims, **characterized in that** the gas inlet (26a; 26b; 26c; 26d) is configured to supply the environment adjustment unit (18a; 18b; 18c; 18d) with a gas via a supply connection that is configured to connect the gas inlet (26a; 26b; 26c; 26d) to a conduit (28a; 28b; 28c; 28d) of the burning chamber (12a; 12b; 12c; 12d), or a fan upstream of the burning chamber (12a; 12b; 12c; 12d).

5. The burner system according to any one of the preceding claims, **characterized in that** the environment adjustment unit (18a; 18d) comprises an emitter unit (30a; 30d) configured to emit electromagnetic radiation, wherein the emitter unit (30a; 30d) has a main emitting direction that is oriented towards the viewing window (14a;14d) and has a main emitting frequency that is outside a transparency frequency band of the viewing window (14a; 14d).

6. The burner system according to Claim 5, **characterized in that** the viewing window (14a; 14d) is at least essentially absorbent, i.e. it has an absorption coefficient of at least 0.25, at the main emitting frequency of the emitter unit (30a; 30d).

7. The burner system according to any one of the preceding Claims, **characterized in that** a transparency frequency band of the viewing window (14a; 14b; 14c; 14d) comprises at least one ultraviolet frequency.

8. The burner system according to any one of the preceding Claims, **characterized by** a sensor unit (32a; 32b; 32c; 32d) whose measuring site is located on, or in a proximity of, the viewing window (14a; 14b; 14c; 14d) and which is configured to trigger the environment adjustment unit (18a; 18b; 18c; 18d) in dependence of an environmental condition detected at the viewing window (14a; 14b; 14c; 14d).

9. A method for operating a burner device of a burner system, in particular a burner system according to any one of Claims 1 to 8, with a viewing window (14a; 14b; 14c; 14d) that is arranged at a burning chamber (12a; 12b; 12c; 12d) of the burner system, to enable a line of sight (16a; 16b; 16c; 16d) from outside the burning chamber (12a; 12b; 12c; 12d) onto at least a portion of a flame-generating region of the burning chamber (12a; 12b; 12c; 12d), wherein the method comprises an environment adjustment phase, in which an environmental condition on an outer side of the viewing window (14a; 14b; 14c; 14d), i.e. a side facing away from the burning chamber (12a; 12b; 12c; 12d), is changed for the purpose of controlling an impact of the environmental condition onto the outer side of the viewing window (14a; 14b; 14c; 14d), wherein an environment adjustment unit (18a; 18b; 18c; 18d) of the burner device comprises a pressure chamber (20a; 20b; 20c: 20d), wherein the viewing window (14a; 14b; 14c; 14d) is arranged on a wall of the pressure chamber (20a; 20b; 20c: 20d), wherein the viewing window (14a; 14b; 14c; 14d) separates an interior of the pressure chamber (20a; 20b; 20c; 20d) from the flame-generating region and comprises at least one gas inlet (26a; 26b; 26c; 26d) configured for filling the pressure chamber (20a; 20b; 20c; 20d) with a gas and in that the environment adjustment phase comprises a pressurizing step (38a), in which a pressure on the outer side of the viewing window (14a; 14b; 14c; 14d) is increased to a level above atmospheric pressure and/or above a burning chamber pressure, **characterized in that** the pressure chamber (20a; 20b; 20c; 20d) is gas-tight apart from the gas inlet (26a; 26b; 26c; 26d).

10. The method according to Claim 9, **characterized in that** the environment adjustment phase comprises a radiation step (40a), in which the viewing window (14a; 14d) is irradiated with electromagnetic radiation at a main emitting frequency outside a transparency frequency band of the viewing window (14a; 14d).

11. The method according to Claim 10, **characterized in that** the radiation step is continued or repeated at least until a dewpoint of water is exceeded at the viewing window (14a; 14d).

12. The method according to any one of Claims 10 to 11, **characterized in that** an emitter unit (30a; 30d) of the environment adjustment unit (18a; 18d) emits the electromagnetic radiation towards the viewing window (14a; 14d) before and/or during an ignition phase of the burner chamber.

## Patentansprüche

1. Brennersystem, das mindestens eine Brennervorrichtung und eine Brennkammer (12a; 12b; 12c; 12d), an der die Brennervorrichtung angeordnet ist, umfasst, wobei die Brennervorrichtung für eine Überwachung einer Flamme in der Brennkammer (12a; 12b; 12c; 12d) vorgesehen ist, wobei sie ein Sichtfenster (14a; 14b; 14c; 14d), das an der Brennkammer (12a; 12b; 12c; 12d) angeordnet ist, um eine Sichtlinie (16a; 16b; 16c; 16d) von außerhalb der Brennkammer (12a; 12b; 12c; 12d) zumindest auf einen Abschnitt eines Flammenerzeugungsbereichs der Brennkammer (12a; 12b; 12c; 12d) zu ermöglichen, und eine Umgebungseinstelleinheit (18a; 18b; 18c; 18d), die auf einer Außenseite des Sichtfensters (14a; 14b; 14c; 14d) angeordnet ist und konfiguriert ist, einen Einfluss von mindestens einer Umweltbedingung auf die Außenseite des Sichtfensters (14a; 14b; 14c; 14d) zu steuern, umfasst, wobei die Umgebungseinstelleinheit (18a; 18b; 18c; 18d) eine Druckkammer (20a; 20b; 20c; 20d) umfasst, wobei das Sichtfenster (14a; 14b; 14c; 14d) auf einer Wand der Druckkammer (20a; 20b; 20c; 20d) angeordnet ist, wobei das Sichtfenster (14a; 14b; 14c; 14d) einen Innenraum der Druckkammer (20a; 20b; 20c; 20d) vom Flammenerzeugungsbereich trennt und mindestens einen Gaseinlass (26a; 26b; 26c; 26d) umfasst, der zum Befüllen der Druckkammer (20a; 20b; 20c; 20d) mit einem Gas konfiguriert ist, **dadurch gekennzeichnet, dass** die Druckkammer (20a; 20b; 20c; 20d) abgesehen vom Gaseinlass (26a; 26b; 26c; 26d) gasdicht ist.

2. Brennersystem nach Anspruch 1, **gekennzeichnet durch** einen Flammensensor (22a; 22b), der im Inneren der Umgebungseinstelleinheit (18a; 18b) angeordnet ist.

3. Brennersystem nach Anspruch 1 oder 2, **gekennzeichnet durch** ein weiteres Sichtfenster (24c; 24d) zum Zweck des Verlängerns der Sichtlinie (16c; 16d) durch die Umgebungseinstelleinheit (18c; 18d).

4. Brennersystem nach einem der vorhergehenden Ansprüche, **dadurch gekennzeichnet, dass** der Gaseinlass (26a; 26b; 26c; 26d) konfiguriert ist, die Umgebungseinstelleinheit (18a; 18b; 18c; 18d) über eine Zuführverbindung, die konfiguriert ist, den Gaseinlass (26a; 26b; 26c; 26d) mit einer Leitung (28a; 28b; 28c; 28d) der Brennkammer (12a; 12b; 12c; 12d) oder einem Gebläse stromaufwärts der Brennkammer (12a; 12b; 12c; 12d) zu verbinden, mit einem Gas zu versorgen.

5. Brennersystem nach einem der vorhergehenden Ansprüche, **dadurch gekennzeichnet, dass** die Umgebungseinstelleinheit (18a; 18d) eine Emittereinheit (30a; 30d) umfasst, die konfiguriert ist, elektromagnetische Strahlung zu emittieren, wobei die Emittereinheit (30a; 30d) eine Hauptemissionsrichtung aufweist, die in Richtung des Sichtfensters (14a; 14d) orientiert ist, und eine Hauptemissionsfrequenz aufweist, die außerhalb eines Durchlässigkeitsfrequenzbands des Sichtfensters (14a; 14d) liegt.

6. Brennersystem nach Anspruch 5, **dadurch gekennzeichnet, dass** das Sichtfenster (14a; 14d) zumindest im Wesentlichen absorbierend ist, d. h. es weist einen Absorptionskoeffizienten von mindestens 0,25 bei der Hauptemissionsfrequenz der Emittereinheit (30a; 30d) auf.

7. Brennersystem nach einem der vorhergehenden Ansprüche, **dadurch gekennzeichnet, dass** ein Durchlässigkeitsfrequenzband des Sichtfensters (14a; 14b; 14c; 14d) mindestens eine Ultraviolettfrequenz umfasst.

8. Brennersystem nach einem der vorhergehenden Ansprüche, **gekennzeichnet durch** eine Sensoreinheit (32a; 32b; 32c; 32d), deren Messort auf dem Sichtfenster oder in räumlicher Nähe des Sichtfensters (14a; 14b; 14c; 14d) angeordnet ist und die konfiguriert ist, die Umgebungseinstelleinheit (18a; 18b; 18c; 18d) in Abhängigkeit von einer Umgebungsbedingung, die am Sichtfenster (14a; 14b; 14c; 14d) detektiert wird, zu aktivieren.

9. Verfahren zum Betreiben einer Brennervorrichtung eines Brennersystems, insbesondere eines Brennersystems nach einem der Ansprüche 1 bis 8, mit einem Sichtfenster (14a; 14b; 14c; 14d), das an einer Brennkammer (12a; 12b; 12c; 12d) des Brennersystems angeordnet ist, um eine Sichtlinie (16a; 16b; 16c; 16d) von außerhalb der Brennkammer (12a; 12b; 12c; 12d) zumindest auf einen Abschnitt eines Flammenerzeugungsbereichs der Brennkammer (12a; 12b; 12c; 12d) zu ermöglichen, wobei das Verfahren eine Umgebungseinstellphase umfasst, in der eine Umgebungsbedingung auf einer Außenseite des Sichtfensters (14a; 14b; 14c; 14d), d. h. einer Seite, die von der Brennkammer (12a; 12b; 12c; 12d) abgewandt ist, zum Zweck des Steuerns eines Einflusses der Umgebungsbedingung auf die Außenseite des Sichtfensters (14a; 14b; 14c; 14d) geändert wird, wobei eine Umgebungseinstelleinheit (18a; 18b; 18c; 18d) der Brennervorrichtung eine Druckkammer (20a; 20b; 20c; 20d) umfasst, wobei das Sichtfenster (14a; 14b; 14c; 14d) auf einer Wand der Druckkammer (20a; 20b; 20c; 20d) angeordnet ist, wobei das Sichtfenster (14a; 14b; 14c; 14d) einen Innenraum der Druckkammer (20a; 20b; 20c; 20d) vom Flammenerzeugungsbereich trennt und mindestens einen Gaseinlass (26a; 26b; 26c; 26d) umfasst, der zum Befüllen der Druckkammer (20a; 20b; 20c; 20d) mit einem Gas konfiguriert ist, und dass die Umgebungseinstellphase einen Druckbeaufschlagungsschritt (38a) umfasst, in dem ein Druck auf der Außenseite des Sichtfensters (14a; 14b; 14c; 14d) auf einen Pegel über Atmosphärendruck und/oder über einem Druckkammerdruck erhöht wird, **dadurch gekennzeichnet, dass** die Druckkammer (20a; 20b; 20c; 20d) abgesehen vom Gaseinlass (26a; 26b; 26c; 26d) gasdicht ist.

10. Verfahren nach Anspruch 9, **dadurch gekennzeichnet, dass** die Umgebungseinstellphase einen Bestrahlungsschritt (40a) umfasst, in dem das Sichtfenster (14a; 14d) mit elektromagnetischer Strahlung mit einer Hauptemissionsfrequenz außerhalb eines Durchlässigkeitsfrequenzbands des Sichtfensters (14a; 14d) bestrahlt wird.

11. Verfahren nach Anspruch 10, **dadurch gekennzeichnet, dass** der Bestrahlungsschritt zumindest bis ein Taupunkt von Wasser am Sichtfenster (14a; 14d) überschritten wird, fortgesetzt oder wiederholt wird.

12. Verfahren nach einem der Ansprüche 10 bis 11, **dadurch gekennzeichnet, dass** eine Emittereinheit (30a; 30d) der Umgebungseinstelleinheit (18a; 18d) die elektromagnetische Strahlung vor und/oder während einer Zündphase der Brennkammer in Richtung des Sichtfensters (14a; 14d) emittiert.

**Revendications**

1. Système de brûleur comprenant au moins un dispositif de brûleur et une chambre de combustion (12a ; 12b ; 12c ; 12d), au niveau de laquelle est agencé le dispositif de brûleur, le dispositif de brûleur servant à la surveillance d'une flamme au sein de la chambre de combustion (12a ; 12b ; 12c ; 12d), comprenant un regard (14a ; 14b ; 14c ; 14d) qui est agencé au niveau de la chambre de combustion (12a ; 12b ; 12c ; 12d) pour offrir une ligne de visée (16a ; 16b ; 16c ; 16d) depuis l'extérieur de la chambre de combustion (12a ; 12b ; 12c ; 12d) sur au moins une partie d'une région de production de flamme de la chambre de combustion (12a ; 12b ; 12c ; 12d) et une unité de réglage de milieu ambiant (18a ; 18b ; 18c ; 18d), qui est agencée sur un côté extérieur du regard (14a ; 14b ; 14c ; 14d) et est configurée pour lutter contre l'impact d'au moins une condition ambiante sur le côté extérieur du regard (14a ; 14b ; 14c ; 14d), l'unité de réglage de milieu ambiant (18a ; 18b ; 18c ; 18d) comprenant une chambre de pression (20a ; 20b ; 20c ; 20d), le regard (14a ; 14b ; 14c ; 14d) étant agencé sur une paroi de la chambre de pression (20a ; 20b ; 20c ; 20d), le regard (14a ; 14b ; 14c ; 14d) séparant l'intérieur de la chambre de pression (20a ; 20b ; 20c ; 20d) de la région de production de flamme et comprenant au moins une admission de gaz (26a ; 26b ; 26c ; 26d) configurée pour remplir de gaz la chambre de pression (20a ; 20b ; 20c ; 20d), **caractérisé en ce que** la chambre de pression (20a ; 20b ; 20c ; 20d) est étanche aux gaz hormis l'admission de gaz (26a ; 26b ; 26c ; 26d).

2. Système de brûleur selon la revendication 1, **caractérisé par** un détecteur de flamme (22a ; 22b) qui est agencé à l'intérieur de l'unité de réglage de milieu ambiant (18a ; 18b).

3. Système de brûleur selon la revendication 1 ou 2, **caractérisé par** un autre regard (24c ; 24d) aux fins de prolonger la ligne de visée (16c ; 16d) à travers l'unité de réglage de milieu ambiant (18c ; 18d).

4. Système de brûleur selon l'une quelconque des revendications précédentes, **caractérisé en ce que** l'admission de gaz (26a ; 26b ; 26c ; 26d) est configurée pour alimenter en gaz l'unité de réglage de milieu ambiant (18a ; 18b ; 18c ; 18d) par le biais d'un raccord d'alimentation qui est configuré pour raccorder l'admission de gaz (26a ; 26b ; 26c ; 26d) à une conduite (28a ; 28b ; 28c ; 28d) de la chambre de combustion (12a ; 12b ; 12c ; 12d), ou un ventilateur en amont de la chambre de combustion (12a ; 12b ; 12c ; 12d).

5. Système de brûleur selon l'une quelconque des revendications précédentes, **caractérisé en ce que** l'unité de réglage de milieu ambiant (18a ; 18d) comprend une unité émetteur (30a ; 30d) configurée pour émettre un rayonnement électromagnétique, l'unité émetteur (30a ; 30d) ayant une direction d'émission principale qui est orientée vers le regard (14a ; 14d) et ayant une fréquence d'émission principale en dehors d'une bande de fréquences de transparence du regard (14a ; 14d).

6. Système de brûleur selon la revendication 5, **caractérisé en ce que** le regard (14a ; 14d) est au moins essentiellement absorbant, autrement dit il présente un coefficient d'absorption d'au moins 0,25 à la fréquence d'émission principale de l'unité émetteur (30a ; 30d).

7. Système de brûleur selon l'une quelconque des revendications précédentes, **caractérisé en ce qu'**une bande de fréquences de transparence du regard (14a ; 14b ; 14c ; 14d) comprend au moins une fréquence de l'ultraviolet.

8. Système de brûleur selon l'une quelconque des revendications précédentes, **caractérisé en ce qu'**une unité capteur (32a ; 32b ; 32c ; 32d) dont le site de mesure est situé sur le regard (14a ; 14b ; 14c ; 14d) ou à proximité de celuici et qui est configurée pour déclencher l'unité de réglage de milieu ambiant (18a ; 18b ; 18c ; 18d) en fonction d'une condition ambiante détectée au niveau du regard (14a ; 14b ; 14c ; 14d).

9. Procédé pour faire fonctionner un dispositif de brûleur d'un système de brûleur, plus particulièrement d'un système de brûleur selon l'une quelconque des revendications 1 à 8, pourvu d'un regard (14a ; 14b ; 14c ; 14d) qui est agencé au niveau d'une chambre de combustion (12a ; 12b ; 12c ; 12d) du système de brûleur, pour offrir une ligne de visée (16a ; 16b ; 16c ; 16d) depuis l'extérieur de la chambre de combustion (12a ; 12b ; 12c ; 12d) sur au moins une partie d'une région de production de flamme de la chambre de combustion (12a ; 12b ; 12c ; 12d), le procédé comprenant une phase de réglage de milieu ambiant, dans laquelle une condition ambiante sur un côté extérieur du regard (14a ; 14b ; 14c ; 14d), autrement dit un côté orienté à l'opposé de la chambre de combustion (12a ; 12b ; 12c ; 12d), est modifiée aux fins de lutter contre l'impact de la condition ambiante sur le côté extérieur du regard (14a ; 14b ; 14c ; 14d), une unité de réglage de milieu ambiant (18a ; 18b ; 18c ; 18d) du dispositif de brûleur comprenant une chambre de pression (20a ; 20b ;

20c ; 20d), le regard (14a ; 14b ; 14c ; 14d) étant agencé sur une paroi de la chambre de pression (20a ; 20b ; 20c ; 20d), le regard (14a ; 14b ; 14c ; 14d) séparant l'intérieur de la chambre de pression (20a ; 20b ; 20c ; 20d) de la région de production de flamme et comprenant au moins une admission de gaz (26a ; 26b ; 26c ; 26d) configurée pour remplir de gaz la chambre de pression (20a ; 20b ; 20c ; 20d), et la phase de réglage de milieu ambiant comprenant une étape de mise sous pression (38a), à laquelle la pression sur le côté extérieur du regard (14a ; 14b ; 14c ; 14d) est portée à un niveau supérieur à la pression atmosphérique et/ou supérieur à la pression dans la chambre de combustion, **caractérisé en ce que** la chambre de pression (20a ; 20b ; 20c ; 20d) est étanche aux gaz hormis l'admission de gaz (26a ; 26b ; 26c ; 26d).

10. Procédé selon la revendication 9, **caractérisé en ce que** la phase de réglage de milieu ambiant comprend une étape de rayonnement (40a), à laquelle le regard (14a ; 14d) est exposé à un rayonnement électromagnétique à une fréquence d'émission principale en dehors d'une bande de fréquences de transparence du regard (14a ; 14d).

11. Procédé selon la revendication 10, **caractérisé en ce que** l'étape de rayonnement se poursuit ou se répète jusqu'à ce que le point de rosée de l'eau au niveau du regard (14a ; 14d) soit dépassé.

12. Procédé selon l'une quelconque des revendications 10 à 11, **caractérisé en ce qu'**une unité émetteur (30a ; 30d) de l'unité de réglage de milieu ambiant (18a ; 18d) émet le rayonnement électromagnétique en direction du regard (14a ; 14d) avant et/ou pendant une phase d'allumage de la chambre de combustion.

# Fig. 1

## Fig. 2

36a

50a

38a

52a

40a

# Fig. 3

# Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2612374 A1
- KR 20120124590 A
- KR 20030075234 A
- JP 2003194481 A